Europäisches Patentamt

European Patent Office

Office européen des brevets

(11) Publication number: **0 031 712**
**B1**

# EUROPEAN PATENT SPECIFICATION

(45) Date of publication of patent specification: **05.09.84**

(51) Int. Cl.³: **B 62 M 9/12**

(21) Application number: **80304691.1**

(22) Date of filing: **23.12.80**

(54) **Chain guide for cycle derailleur and use thereof.**

(30) Priority: **29.12.79 JP 184225/79**

(43) Date of publication of application:
**08.07.81 Bulletin 81/27**

(45) Publication of the grant of the patent:
**05.09.84 Bulletin 84/36**

(84) Designated Contracting States:
**BE DE FR GB IT**

(56) References cited:
**EP-A-0 002 964**
**BE-A- 564 688**
**FR-A-1 064 020**
**FR-E- 61 034**
**GB-A-2 047 359**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Minamimachi Midorigaoka**
**Sakai-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a chain guide or chain shift means for a cycle derailleur for use in switching a drive chain between the sprockets of a multi-stage sprocket assembly, which chain guide comprises a pulley plate, pulley shafts fixed to the pulley plate, and pulley sheets supported rotatably on respective pulley shafts.

In known such chain guides, the pulley wheels are usually formed each in one piece of a metallic material, such as an alluminium alloy, or a wear-resistant synthetic resin. The pulley plate is connected to a movable member of the derailleur and moves together with said movable member axially with respect to a multi-stage sprocket assembly. In use, a drive chain, which is guided by the pulley wheels supported on the pulley plate, is switched to a desired one of the multi-stage sprocket assembly with respect to the chain together with the movable member and pulley plate, whereby teeth of the pulley wheels contact with link plates of the chain.

As a result of the above, a biasing force acts on the pulley wheels axially thereof. This results in the pulley wheels being subjected to a degree of resistance preventing their free rotation.

The drive chain, when it is switched to one of the sprockets of the multi-stage sprocket assembly, changes its path or track following selection of the desired sprocket of the multi-sprocket assembly for meshing with the chain, so that the chain, even after switching thereof, interferes at its link plates with teeth of the pulley wheels. This results in the pulley wheels being subjected to an axial biasing force which creates a resistance to smooth rotation of the pulley wheels.

This resistance results in impaired speed control and an increased load on a cyclist.

There is known from FR—A—1 064 020 a chain guide for a cycle derailleur for use in switching a drive chain between the sprockets of a multi-stage sprocket assembly, which chain guide comprises a pulley plate, pulley shafts secured to said plate, and pulley wheels rotatably mounted on respective ones of said pulley shafts, each said pulley wheel comprising an annular toothed pulley member having at its outer periphery a plurality of teeth, and a pulley body having at its central portion a shaft bore for receiving therethrough a respective said pulley shaft and at its outer periphery a support portion for said-toothed pulley member.

In accordance with the abovementioned patent it has been proposed to provide bearing means between the annular toothed pulley member and the pulley body, the bearing means being formed and arranged to permit relative angular displacement between the rotational axes of the toothed pulley member and the pulley body when the former is subjected to a generally axial biasing force by the drive chain during gear clamping. This form of construction is however relatively complex and expensive to manufacture.

It is an object of the present invention to avoid or minimize one or more of the above disadvantages and especially to provide a chain guide which can limit to a minimum the rotational resistance to which each pulley is subjected by the axially baising forces acting thereon due to interference of link plates of the drive chain with teeth of the pulley wheels when the drive chain is switched or the chain path or track changes.

The present invention provides a chain guide for a cycle derailleur for use in switching a drive chain between the sprockets of a multi-stage sprocket assembly, which chain guide comprises a pulley plate, pulley shafts secured to said plate and pulley wheels rotatably mounted on respective ones of said pulley shafts, each said pulley wheel comprising an annular toothed pulley member having at its outer periphery a plurality of teeth, and a pulley body having at its central portion a shaft bore for receiving therethrough a respective said pulley shaft and at its outer periphery a support portion for said toothed pulley member, characterised in that said toothed pulley member is formed of a hard material and said pulley body is formed of a resiliently deformable material so that the toothed pulley member is axially displaceable together with the support portion of said pulley body, relative to said pulley shaft with resilient deformation of said pulley body, whereby increased rotational resistance of said pulley wheels at said shafts is substantially avoided.

Thus by means of the present invention rotational resistance suffered by the pulley wheels is kept to a minimum, thereby maintaining a smooth free rotation of the pulley wheels.

Further preferred features and advantages of the invention will appear from the following description, given by way of examples of a preferred embodiment illustrated with reference to the accompanying drawings in which:

Fig. 1 is a side view of a rear derailleur employing a chain guide of the invention;

Fig. 2 is an enlarged side view of a pulley wheel alone; and

Fig. 3 is an enlarged sectional view taken along the line III—III in Fig. 1.

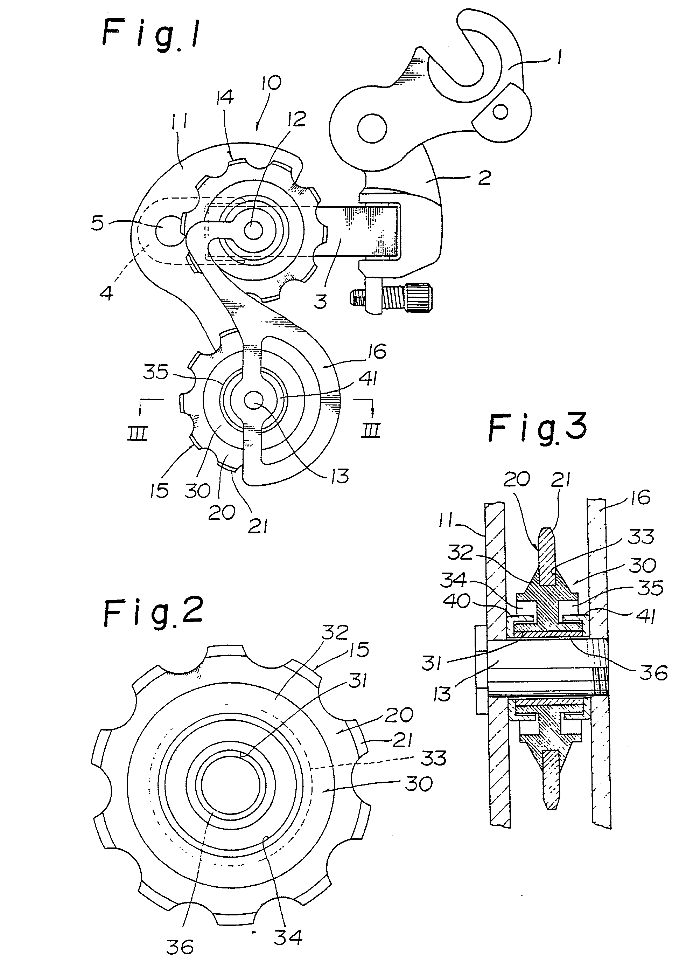

Fig. 1 shows a chain guide or chain shift means 10 in use with a conventional rear derailleur which comprises a mounting bracket 1 fixed to a cycle frame (not shown), a base member 2 mounted on the bracket 1, a pair of linkage members 3 connected to the base member 2, and a movable member 4 connected to the linkage members 3. The chain guide 10 is connected to the movable member 4 via a pivot pin 5. A control wire (not shown) is attached, in use, at its one end to one of the linkage members 3 or to the movable member 4 and operated to move the movable member 4 axially of a multi-stage sprocket assembly (not shown) mounted on the cycle, so that a drive chain (not shown) is shifted by the chain guide 10 to a desired one of the sprockets, thereby changing the bicycle speed or gear. The chain guide 10 essentially comprises a pulley plate 11 connected to the movable member 4, pulley shafts 12 and 13 secured to the pulley plate 11, and pulley wheels 14 and 15 supported rotatably on respective pulley shafts 12 and 13.

One of the pulley wheels 14, 15 is generally referred to as the guide pulley (wheel) 14 and the other as the (chain) tension pulley (wheel) 15. The guide pulley 14 guides the drive chain to a desired one of the sprockets of the multi-stage sprocket assembly, whilst the tension pulley 15 maintains the drive chain under a generally constant tension by means of a tension spring (not shown), wheich is interposed between the pulley plate 11 and the movable member 4 and functions to apply tension to the chain extending round the tension pulley 15. In addition, as may be seen in Fig. 1 a guard plate 16 is mounted on the distal ends of the pulley shafts 12 and 13 and disposed opposite the pulley plate 11, the guard plate 16 preventing the chain from escaping from the respective pulleys 14 and 15.

According to the present invention the pulley wheels 14 and 15 are constructed as described below.

For convenience of description, one of the pulley wheels only will be described in detail since the same construction is employed for both the pulley wheels 14 and 15.

The pulley wheel 15, as shown in Figs. 2 and 3, comprises an annular toothed member 20 provided at its outer periphery with a plurality of teeth 21, and a pulley body 30 which has at its centre a shaft bore 31 disposed around the pulley shaft 13 and at its outer periphery a support portion 32 for the annular toothed member 20. The toothed member 20 is formed of a metallic material, such as aluminum or an alloy thereof or iron or steel, or some other hard material, such as a hard wear resistant synthetic resin. The pulley body 30 is, in contrast, formed of a resiliently deformable material, such as rubber, or a soft synthetic polymeric material, possibly a resin, but preferably soft rubber, and being generally oil-resistant and wear-resistant.

The annular toothed member 20 shown in the drawings is formed of a steel plate having a predetermined thickness. The pulley body 30 is formed of hard rubber and provided at its outer peripheral support portion 32 with a mounting groove 33 having a width substantially equal to the thickness of the toothed member 20, so that the toothed member 20 can be received at its inner periphery in the groove 33, for coupling with and mounting on, the pulley body 30.

The opposed walls of the mounting groove 33 are resiliently deformed for mounting of the toothed member 20, in the groove 33, or the toothed member 20 is previously inserted into the groove 33 and then integrated with the pulley body 30.

The pulley body 30 is provided at both axial sides thereof with annular recesses 34 and 35, to improve its resilient deformability. Caps 40 and 41, as shown in Fig. 3, are fitted onto the pulley body 30 so as to seal a gap between the shaft bore 31 and the pulley shaft 13, this gap usually being filled with grease. The pulley body 30 shown in Fig, 3, has a metallic bush 36 inserted into the shaft bore 31 to facilitate smooth rotation of the pulley wheel 15.

When the derailleur is operated to move the movable member 4 axially of the multi-stage sprocket assembly to switch the chain to a desired sprocket, the chain guide 10 moves together with the movable member 4 so that the pulley wheels 14 and 15 guide the drive chain, interfering, at their teeth, with link plates of the drive chain, and thereby being subjected to an axially acting biasing force.

When it is subjected to such an axial biasing force, the discrete annular toothed member 20 is axially displaced thereby, but the displacement is taken up by resilient deformation of the pulley body 30 so that it is not transmitted to the shaft bore 31, and hence, the pulley shafts 12 and 13 are not subjected to an additional rotational resistance (despite the deformation of the pulley body 30 and forces causing it) and thus continues to permit a smooth rotation of the pulley wheels 14, 15.

Where the chain, after being switched to a desired sprocket, is displaced from its track between a front sprocket and one of the multi-stage sprocket assembly sprockets meshing with the chain, the pulley wheels 14 and 15 are subjected to said axial biasing force. In this case, the toothed member 20 is readily displaced, in similar manner to that described above, in the same direction as the displaced chain track, thereby permitting smooth rotation of the pulley wheels 14 and 15 to continue.

As will be apparent from the above, the chain guide of the invention, even when an axial load is applied to the respective pulley wheels 14 and 15, allows the toothed member 20 to be displaced and the pulley body 30 to absorb the axial load, thereby maintaining smooth rotation of the pulley wheels and minimising the effort required to ride the bicycle.

Furthermore, the pulley body 30 can also restrict noise resulting from engagement of the respective pulley wheels 14 and 15 with the drive chain.

**Claims**

1. A chain guide for a cycle derailleur for use in switching a drive chain between the sprockets of a multi-stage sprocket assembly, which chain guide (10) comprises a pulley plate (11), pulley shafts (12, 13) secured to said plate (11), and pulley wheels (14, 15) rotatably mounted on respective ones of said pulley shafts (12, 13), each said pulley wheel (14, 15) comprising an annular toothed pulley member (20) having at its outer periphery a plurality of teeth (21), and a pulley (30) having at its central portion a shaft bore (31) for receiving therethrough a respective said pulley shaft (12, 13) and at its outer periphery a support portion (32) for said toothed pulley member (20), characterized in that said toothed pulley member (20) is formed of a hard material and said pulley body (30) is formed of a resiliently deformable material so that the toothed pulley member (20) is axially displaceable together with the support portion (32) of said pulley body (30), relative to said pulley shaft (12, 13) with resilient deformation of said pulley body (30), whereby increased rotational resistance of said pulley wheels (14, 15) at said shafts (12, 13) is substantially avoided.

2. A chain guide according to Claim 1, wherein annular recesses (34, 35) are provided at both axial sides of said pulley body (30).

3. A chain guide according to Claim 2, wherein caps (40, 41) are mounted in said annular recesses (34, 35).

4. A chain guide according to any one of Claims 1 to 3 wherein said toothed pulley member (20) is generally in the form of a plate of a predetermined thickness, and said support portion (32) of said pulley body (30) is provided with a mounting groove (33) having a width substantially equal to the thickness of said toothed member (20), and said toothed member (20) is mounted in said mounting groove (33) for connection of said toothed member (20) to said pulley body (30).

5. A chain guide according to any one of Claims 1 to 4, wherein a bush (36) is disposed between the central portion of said pulley body (30) and said shaft (12, 13).

**Revendications**

1. Guidage de chaîne pour dérailleur de bicyclette, utilisable pour faire passer une chaîne d'entraînement d'un pignon à un autre d'un ensemble de plusieurs pignons étagés, ce guidage de chaîne (10) comprenant une plaque de poulies (11), des axes de poulie (12, 13) fixés à ladite plaque (11), et des roues de poulie (14, 15) montées en rotation sur des axes respectifs des dits axes de poulie (12, 13), chaque roue de poulie (14, 15) comprenant un élément annulaire denté de poulie (20), qui présente une pluralité de dents (21) à sa périphérie extérieure, et un corps de poulie (30) qui présente dans sa partie centrale un alésage (31) pour le passage et le logement d'un axe de poulie (12, (13) respectif et à sa périphérie extérieure une partie support (32) pour l'élément denté de poulie (20), caractérisé en ce que l'élément denté de poulie (20) est réalisé en une matière dure et le corps de poulie (30) est réalisé en une matière élastiquement déformable, de sorte que l'élément denté de poulie (20) peut se déplacer axialement en même temps que la partie support (32) du corps de poulie (30), par rapport à l'axe de poulie (12, 13) du fait de la déformation élastique du corps de poulie (30), ce qui évite sensiblement l'augmentation de la résistance à la rotation des roues de poulie (14, 15) sur les axes (12, 13).

2. Guidage de chaîne suivant la revendication 1, dans lequel des évidements annulaires (34, 35) sont prévus sur les deux faces axiales du corps de poulie (30).

3. Guidage de chaîne suivant la revendication 2, dans lequel des capuchons (40, 41) sont montés deans les évidements annulaires (34, 35).

4. Guidage de chaîne suivant l'une quelconque des revendications 1 à 3, dans lequel l'élément denté de poulie (20) est sensiblement sous la forme d'une plaque d'épaisseur prédéterminée et la partie support (32) du corps de poulie (30) comporte une gorge de montage (33) de largeur sensiblement égale à l'épaisseur de l'élément denté (20), l'élément denté (20) étant tenu dans la gorge de montage (33) pour la jonction de l'élément denté (20) au corps de poulie (30).

5. Guidage de chaîne suivant l'une quelconque des revendications 1 à 4, dans lequel une douille (36) est disposée entre la partie centrale du corps de poulie (30) et l'axe (12, 13).

**Patentansprüche**

1. Kettenführung für Fahrradgangschaltung zum Umschalten einer Antriebskette zwischen den Zahnrädern einer Mehrstufen-Zahnradanordnung, wobei die Kettenführung (10) eine Kettenscheibe (11), Kettenwellen (12, 13), die an der Scheibe (11) befestigt sind, und Kettenräder (14, 15) aufweist, die drehbar auf je einer der Kettenwellen (12, 13) befestigt sind, wobei jedes der Kettenräder (14, 15) ein ringförmiges, gezahntes Kettenführungsteil (20) aufweist, an dessen Außenumfang eine Vielzahl von Zähnen (21) vorgesehen sind, und die einen Grundkörper (30), in dessen Zentralteil eine Bohrung (31) vorgesehen ist, die jeweils eine der Kettenwellen (12, 13) aufnimmt, und an essen Außenumfang ein Trageteil (32) für das gezahnte Führungsteil (20) vorgesehen ist, dadurch gekennzeichnet, daß das gezahnte Führungsteil (20) aus einem harten Material besteht und der Grundkörper (30) aus einem elastisch deformierbaren Material, so daß das gezahnte Führungsteil (20) axial gemeinsam mit dem Trageteil (32) des Grundkörpers (30) relativ zur Kettenwelle (12, 13) verschiebbar ist unter elastischer Verformung des Grundkörpers (30), wodurch der Drehwiderstand der Kettenräder (14, 15) auf den Kettenwellen (12, 13) im wesentlichen vermieden wird.

2. Kettenführung nach Anspruch 1, dadurch gekennzeichnet, daß ringförmige Ausnehmungen (34, 35) auf beiden axialen Seiten des Grundkörpers (30) vorgesehen sind.

3. Kettenführung nach Anspruch 2, dadurch gekennzeichnet, daß Kappen (40, 41) an den ringförmigen Ausnehmungen (34, 35) befestigt sind.

4. Kettenführung nach einem der Ansprüche 1 bis 3, dadurch gekennzeichnet, daß das gezahnte Führungsteil (20) im wesentlichen die Form einer Platte mit vorbestimmter Dicke hat, und das Trageteil (32) des Grundkörpers (30) mit einer Befestigungsnut (33) versehen ist, die eine Breite hat, die im wesentlichen gleich der Dicke des gezahnten Teils (20) ist, und daß das gezahnte Teil (20) in der Befestigungsnut (33) befestigt ist für die Verbindung des gezahnten Teils (20) mit dem Grundkörper (30).

5. Kettenführung nach einem der Ansprüche 1 bis 4, dadurch gekennzeichnet, daß eine Laufbuchse (36) zwischen dem Zentralteil des Grundkörpers (30) und der Welle (12, 13) angeordnet ist.

0 031 712

# Fig.1

# Fig.3

# Fig.2

1